# FASCICULE DE BREVET EUROPEEN

(11) **EP 0 885 141 B1**
(45) Date de publication et mention de la délivrance du brevet: **02.05.2003**
(21) Numéro de dépôt: 97953953.3
(22) Date de dépôt: 24.12.1997
(51) Int. Cl.: B64D 29/00

(54) **NACELLE DE TURBOREACTEUR A ECOULEMENT LAMINAIRE**
TRIEBWERKSGONDEL MIT LAMINARSTROMUNG
TURBOJET POD WITH LAMINAR FLOW

(30) Priorité: 26.12.1996 FR 9616038
(43) Date de publication de la demande: 23.12.1998
(73) Titulaire: European Aeronautic Defence and Space Company - EADS France, 75016 Paris (FR)
(72) Inventeur: CANADAS, Marc, F-31200 Toulouse (FR)
(74) Mandataire: Poulin, Gérard
(86) Numéro de dépôt international: FR9702429
(87) Numéro de publication internationale: WO98029306

(56) Documents cités:
- GB-A- 2 259 679
- GB-A- 2 274 490

## Description

### Domaine technique

L'invention concerne une nacelle de turboréacteur dont l'architecture est optimisée, de façon à assurer un écoulement laminaire de l'air autour de la nacelle jusqu'à proximité des inverseurs de poussée.

L'invention s'applique en particulier aux nacelles des turboréacteurs à double flux équipant les aéronefs.

### Etat de la technique

Dans un turboréacteur à double flux, la nacelle canalise autour d'un moteur central le flux d'air secondaire engendré par une soufflante. Celle-ci est entraînée par une turbine basse pression qui fait partie du moteur central.

La liaison mécanique entre le turboréacteur et la voilure de l'aéronef est assurée par une structure appelée "mât". Cette structure complexe a pour fonctions d'assurer la transmission des efforts et de permettre le passage des différents circuits, notamment hydrauliques, qui relient le turboréacteur à l'aéronef.

En partant de l'avant du turboréacteur dans le sens de l'écoulement de l'air, la nacelle comprend généralement un caisson d'entrée d'air, des capots pivotants permettant d'accéder à un boîtier d'accessoires logé dans la nacelle, des inverseurs de poussée, et des capots articulés conçus pour assurer la maintenance du moteur central.

Dans cette architecture classique, les éléments mobiles que constituent notamment les capots pivotants situés immédiatement derrière le caisson d'entrée d'air créent des discontinuités importantes qui perturbent fortement l'écoulement aérodynamique de l'air le long de la surface extérieure de la nacelle. Par conséquent, même si cette forme est optimisée afin que l'écoulement théorique de l'air soit laminaire au moins autour de la moitié avant de la nacelle, il est impossible d'obtenir un tel écoulement dans la pratique. Cela se traduit par un accroissement indésirable de la traînée, par rapport à sa valeur théorique.

De plus, les capots articulés sont des structures minces et de faible rigidité. Ils subissent donc en vol des déformations importantes qui ne permettent pas de maintenir leur forme aérodynamique. Lorsque l'aéronef est en vol, ces déformations augmentent le décalage qui existe entre'l'écoulement laminaire théorique de l'air autour de la moitié avant de la nacelle et la valeur réelle de cet écoulement. La traînée s'en trouve encore pénalisée.

Dans le document FR-A-2 732 074, en référence aux figures 8 et 9, on a envisagé de remplacer les capots pivotants situés habituellement derrière le caisson d'entrée d'air de la nacelle par une enveloppe extérieure fixée au mât et prolongeant ce caisson vers l'arrière.

Par rapport à une architecture de nacelle traditionnelle, cet agencement permet de supprimer les discontinuités de surface autour de toute la partie avant de la nacelle, à l'exception de la zone de raccordement de celle-ci sur le mât.

Cependant, l'enveloppe extérieure fixe qui . prolonge le caisson d'entrée d'air sur les figures 8 et 9 du document FR-A-2 732 074 reste une tôle mince dépourvue de tout maintien sur -la majeure partie de sa longueur et de sa circonférence. Cette enveloppe subit donc inévitablement en vol des déformations sensibles qui ne permettent pas de maintenir une forme aérodynamique optimale adaptée à l'obtention d'un écoulement laminaire de l'air autour de la nacelle.

De plus, la fixation de la partie avant de la nacelle sur le mât constitue une source supplémentaire de déformation de l'enveloppe extérieure, qui contribue à rendre illusoire l'obtention d'un écoulement laminaire en vol.

En outre, l'architecture décrite dans ce document rend pratiquement impossible l'implantation du boîtier d'accessoires dans la région de la nacelle située autour de la soufflante. En effet, le caractère non démontable de l'enveloppe extérieure fixée au mât interdit toute intervention dans cette région.

Le document GB-A-2 274 490 décrit une nacelle de turboréacteur conforme au préambule de la revendication.

### Exposé de l'invention

L'invention a pour objet une nacelle de turboréacteur, dont l'architecture originale permet de supprimer toute discontinuité au moins sur la moitié avant de sa surface extérieure et de maîtriser, aussi bien au sol qu'en vol, la forme aérodynamique de cette surface afin d'y assurer un écoulement laminaire de l'air, tout en rendant possible l'accès à la région de la nacelle située autour de la soufflante du turboréacteur.

Conformément à l'invention, ce résultat est obtenu au moyen d'une nacelle de turboréacteur, comprenant:
- un élément structural arrière ;
- un élément structural avant, intégrant un caisson d'entrée d'air et une coque extérieure prolongeant vers l'arrière, sans discontinuité, une surface extérieure du caisson d'entrée d'air;
- des moyens de maintien et de guidage, interposés entre l'élément structural avant et un carter de soufflante du turboréacteur, de façon à autoriser un coulissement limité vers l'avant de l'élément structural avant parallèlement à un axe longitudinal de la nacelle ; et
- des moyens de verrouillage s'opposant normalement à ce coulissement;
caractérisée en ce que l'élément structural avant présente une surface extérieure continue qui s'étend sur au moins 50 % de la corde géométrique de la nacelle et entoure en la carénant la partie avant du mât de suspension du turboréacteur.

Dans cette définition, l'expression "corde géométrique" désigne le segment de droite qui relie le bord d'attaque de la nacelle à son bord de fuite, lorsque la nacelle est observée en coupe longitudinale.

Dans l'architecture de la nacelle conforme à l'invention, on donne à la surface extérieure continue de l'élément structural avant une forme aérodynamique optimale, afin d'obtenir un écoulement laminaire de l'air autour de la partie avant de la nacelle. La présence des moyens de maintien et de guidage entre cet élément structural avant et le carter de soufflante permet à la fois d'assurer le maintien de la forme aérodynamique de la surface extérieure continue, lorsque l'aéronef est en vol, et d'accéder à la région de la nacelle qui entoure la soufflante, lorsque l'aéronef est au sol. Les moyens de verrouillage interdisent tout coulissement de l'élément structural avant lorsque l'aéronef est en vol.

Pour tenir compte de certaines contraintes techniques et industrielles et pour permettre de remplacer la lèvre avant du caisson d'entrée d'air lorsque cette lèvre est endommagée, l'élément structural avant comprend une structure principale, réalisée d'un seul tenant, ainsi qu'une lèvre avant interchangeable, montée sur l'extrémité avant de la structure principale par des moyens de fixation démontables. La jonction est réalisée de façon telle qu'aucune discontinuité n'est créée sur la surface extérieure de l'élément structural avant.

Dans la forme de réalisation préférentielle de l'invention, les moyens de verrouillage comprennent des verrous orientés sensiblement parallèlement à l'axe longitudinal de la nacelle, de façon à assurer dans les meilleures conditions possibles la transmission des efforts entre les deux éléments structuraux formant la nacelle. A cet effet, les verrous sont interposés entre l'extrémité arrière de l'élément structural avant et l'extrémité avant de l'élément structural arrière.

Afin d'assurer la transmission des efforts entre l'élément structural avant et le carter de soufflante, l'élément structural avant présente une surface de butée avant et une surface de butée arrière, normalement en appui contre des surfaces d'appui formées sur le carter de soufflante.

De plus, le caractère sensiblement indéformable de la surface extérieure continue de l'élément structural avant peut encore être amélioré en équipant cet élément de pions de cisaillement qui font saillie vers l'arrière selon l'axe longitudinal de la nacelle, à partir des surfaces de butée précitées, de façon à pénétrer sans jeu dans des trous formés dans les surfaces d'appui. Cet agencement peut être inversé, c'est-à-dire que les trous peuvent être formés dans les surfaces de butée et les pions de cisaillement montés sur les surfaces d'appui.

Dans la forme de réalisation préférentielle de l'invention, les moyens de maintien et de guidage comprennent des glissières portées par le carter de soufflante et sur lesquelles peut coulisser l'élément structural avant. Ces glissières sont écartées du carter de soufflante d'une distance supérieure à une déformation maximale de ce dernier susceptible d'être engendrée par une rupture de pale de la soufflante.

Pour tenir compte du caractère coulissant de l'élément structural avant de la nacelle, différents agencements peuvent être prévus pour les tuyauteries qui sont placées au moins en partie dans cet élément.

Ainsi, la nacelle peut comprendre une ou plusieurs tuyauteries rigides telles qu'une tuyauterie de dégivrage, formée d'un tronçon avant monté dans l'élément structural avant et d'un tronçon arrière fixe. Ces deux tronçons sont alors alignés parallèlement à l'axe longitudinal de la nacelle, de façon à être normalement en appui par leurs extrémités, sous l'effet de la dilatation thermique.

La nacelle peut aussi comprendre une ou plusieurs tuyauteries souples, telles qu'une tuyauterie de prise de pression, dont une première extrémité est liée à l'élément structural avant et dont une deuxième extrémité est lovée dans un réceptacle fixe, sous l'action de moyens de tension.

La nacelle peut encore comprendre au moins une autre tuyauterie, telle qu'une tuyauterie de sortie de dégivrage, logée dans l'élément structural avant et débouchant vers l'extérieur de la nacelle, dans l'élément structural arrière.

Grâce à l'architecture selon l'invention, le boîtier d'accessoires qui équipe le turboréacteur peut être logé à volonté soit dans l'élément structural arrière, soit entre le carter de soufflante et l'élément structural avant.

### Brève description des dessins

On décrira à présent, à titre d'exemple non limitatif, une forme de réalisation préférentielle de l'invention, en se référant aux dessins annexés, dans lesquels :
- la figure 1 est une vue en perspective, qui représente schématiquement un turboréacteur à double flux équipé d'une nacelle conforme à l'invention, cette nacelle étant illustrée dans sa position de maintenance permettant d'accéder au boîtier d'accessoires ;
- la figure *2* est une vue en coupe longitudinale qui représente de façon schématique le turboréacteur illustré sur la figure 1, la nacelle étant illustrée en trait plein dans sa position de maintenance et en traits mixtes dans sa position de vol ;
- la figure 3 est une vue en coupe longitudinale comparable à la figure 2, illustrant en partie haute les moyens de maintien et de guidage qui assurent le coulissement de l'élément structural avant de la nacelle et, en partie basse, les verrous qui assurent normalement son blocage en position de vol ;
- la figure 4 est une section selon la ligne IV-IV de la figure 3 ;
- la figure 5 est une vue en coupe à plus grande échelle de la zone V sur la figure 3 ;
- la figure 6 est une vue en coupe à plus grande échelle de la zone VI sur la figure 3 ;
- la figure 7 est une section comparable à la figure 4 illustrant une variante de réalisation de l'invention ; et
- la figure 8 est une vue en coupe longitudinale de la nacelle, qui illustre l'implantation de deux tuyauteries à l'intérieur de celle-ci.

### Description d'une forme de réalisation

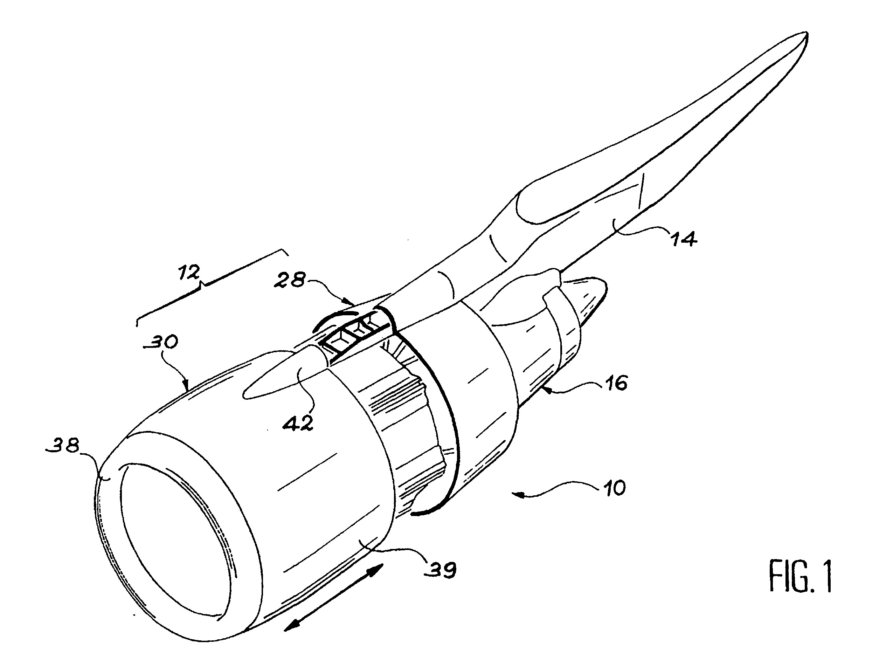

Sur la figure 1, la référence 10 désigne de façon générale un turboréacteur à double flux, dont la nacelle 12 est réalisée conformément à l'invention. Ce turboréacteur 10 est prévu pour être accroché à une structure (non représentée) d'un aéronef, tel qu'un élément de voilure, par l'intermédiaire d'un mât de suspension 14.

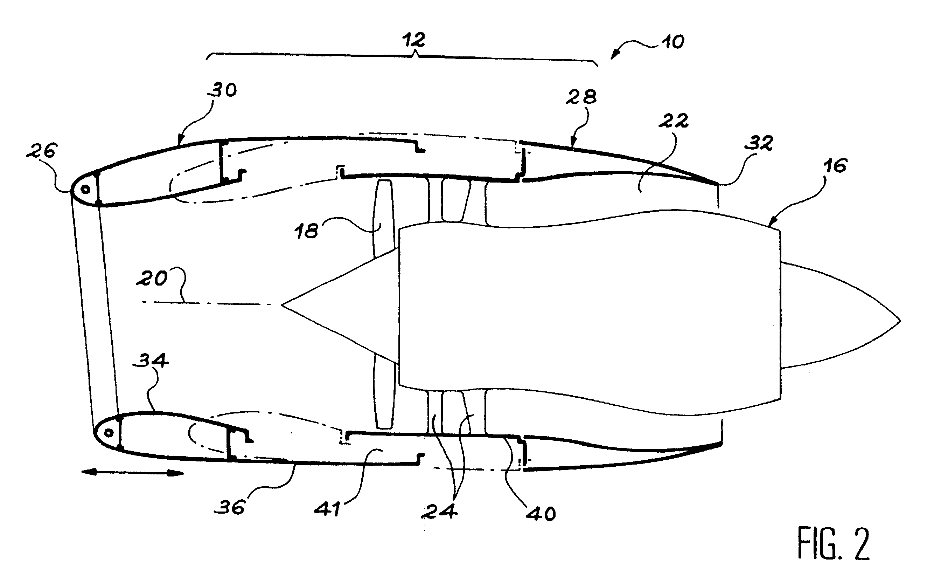

Comme le montre notamment la figure 2, le turboréacteur 10 à double flux comprend, de façon habituelle, un moteur central 16 dans lequel l'air traverse successivement un compresseur, une chambre de combustion, une turbine haute pression et une turbine basse pression (non représentés). Le compresseur est entraîné par la turbine haute pression. La turbine basse pression entraîne une soufflante 18, implantée à l'avant du moteur central 16.

La nacelle 12 est disposée coaxialement autour du moteur central 16 selon un axe longitudinal 20. L'espace annulaire 22 ménagé entre le moteur central 16 et la nacelle 12 canalise le flux d'air secondaire créé par la soufflante 18.

Le moteur central 16 est suspendu directement au mât 14 selon des techniques connues, permettant de reprendre les efforts dans toutes les directions. La nacelle 12 est reliée mécaniquement au moteur central 16 par un ou plusieurs jeux de bras 24, orientés sensiblement radialement par rapport à l'axe longitudinal 20.

De façon plus précise, les bras 24 sont liés rigidement à une virole 40, appelée "carter de soufflante", qui matérialise la surface intérieure de la nacelle 12, dans la région qui entoure la soufflante 18. Le carter de soufflante 40 n'est généralement pas considéré comme faisant partie intégrante de la nacelle, bien qu'il en constitue l'une des parties fonctionnelles.

Dans un turboréacteur à double flux, la nacelle 12 est profilée intérieurement pour assurer une canalisation efficace du flux d'air secondaire créé par la soufflante 18.

Conformément à l'invention, la nacelle 12 présence, en outre, une surface extérieure continue, c'est-à-dire dépourvue de discontinuités, sur au moins 50 % de sa corde géométrique, c'est-à-dire sur au moins la moitié avant de sa longueur dans le sens de l'écoulement de l'air, à partir du bord d'attaque 26. Cette caractéristique évite la création de turbulences dans toute cette zone, ce qui permet d'assurer un écoulement laminaire de l'air en donnant à la surface extérieure de la nacelle un profil optimisé à cet effet.

De plus, l'architecture originale de la nacelle 12 selon l'invention est conçue afin de supprimer ou de réduire au minimum les déformations subies par la surface extérieure de la zone considérée de la nacelle lorsque l'aéronef est en vol. On préserve ainsi, pour l'essentiel, le caractère laminaire de l'écoulement de l'air autour de la nacelle 12.

L'architecture originale selon l'invention permet enfin d'assurer la maintenance du turboréacteur dans des conditions comparables à celles que l'on trouve sur les turboréacteurs existants.

Conformément à l'invention, la nacelle 12 est formée essentiellement de deux parties distinctes, constituées par un élément structural arrière 28 et par un élément structural avant 30.

De façon plus précise, l'élément structural arrière 28 forme un caisson effilé vers l'arrière et dont le bord arrière définit le bord de fuite 32 de la nacelle. Cet élément structural arrière 28 est situé en totalité en arrière des bras 24 et il s'étend sur une longueur inférieure à la moitié de la longueur totale de la nacelle 12, dans le sens de l'écoulement de l'air. L'élément structural arrière 28 loge dans sa partie avant l'inverseur de poussée (non représenté) du turboréacteur. Généralement, il comprend aussi deux capots articulés sur le mât 14, de façon à permettre l'accès au moteur central 16 du turboréacteur lors des opérations de maintenance. L'élément structural arrière 28 est fixé sur le mât 14 et/ou sur le carter de soufflante 40.

L'élément structural avant 30 de la nacelle 12 intègre, conformément à l'invention, un caisson d'entrée d'air 34 qui forme l'extrémité avant de la nacelle, ainsi qu'une coque extérieure 36, qui prolonge vers l'arrière, sans aucune discontinuité, la surface extérieure du caisson d'entrée d'air 34. La longueur cumulée du caisson d'entré d'air 34 et de la coque extérieure 36 est au moins égale à la moitié de la longueur totale de la nacelle 12 dans le sens d'écoulement de l'air, c'est-à-dire parallèlement à l'axe longitudinal 20. Par conséquent, l'élément structural avant 30 présente une surface extérieure continue qui s'étend sur au moins 50 % de la corde géométrique de la nacelle, à partir du bord d'attaque 26. L'absence de discontinuité de surface et l'adoption d'une forme aérodynamique optimisée permettent ainsi d'assurer un écoulement laminaire de l'air autour de la nacelle 12.

Dans la pratique, l'élément structural avant 30 est formé de deux parties liées l'une à l'autre par des moyens de fixation démontables. Ces deux parties sont constituées par une lèvre avant 38 et par une structure principale 39 (figure 1).

La lèvre avant 38 forme uniquement l'extrémité avant du caisson d'entrée d'air 34, qui définit le bord d'attaque 26. Il s'agit d'une pièce métallique d'usure que les risques d'abrasion et d'érosion imposent de rendre démontable.

La structure principale 39 de l'élément structural avant 30 est réalisée d'un seul tenant et inclut la majeure partie du caisson d'entrée d'air 34 ainsi que la coque extérieure 36. Cette structure principale peut être réalisée en métal, en matériau composite ou en associant ces deux technologies. Au moins une partie de ses parois font habituellement l'objet de traitement acoustique. La coque extérieure 36 peut notamment être réalisée en matériau composite de type sandwich, afin d'avoir une bonne rigidité.

Comme l'illustre en particulier la figure 1, l'élément structural- avant 30 comporte, au moins dans sa partie arrière constituée par la coque extérieure 36, une protubérance 42 qui entoure sans discontinuité et en la carénant la partie avant du mât 14. Cette caractéristique permet d'optimiser la forme aérodynamique sur toute la moitié avant de la nacelle, y compris dans la zone d'accrochage du turboréacteur au mât 14.

Conformément à l'invention, l'élément structural avant 30 est relié au carter de soufflante 40 de façon telle que la forme aérodynamique de la surface extérieure de cet élément soit maintenue efficacement lorsque l'aéronef est en vol, tout en autorisant l'accès à la zone annulaire 43 délimitée entre le carter de soufflante 40 et la coque extérieure 36.

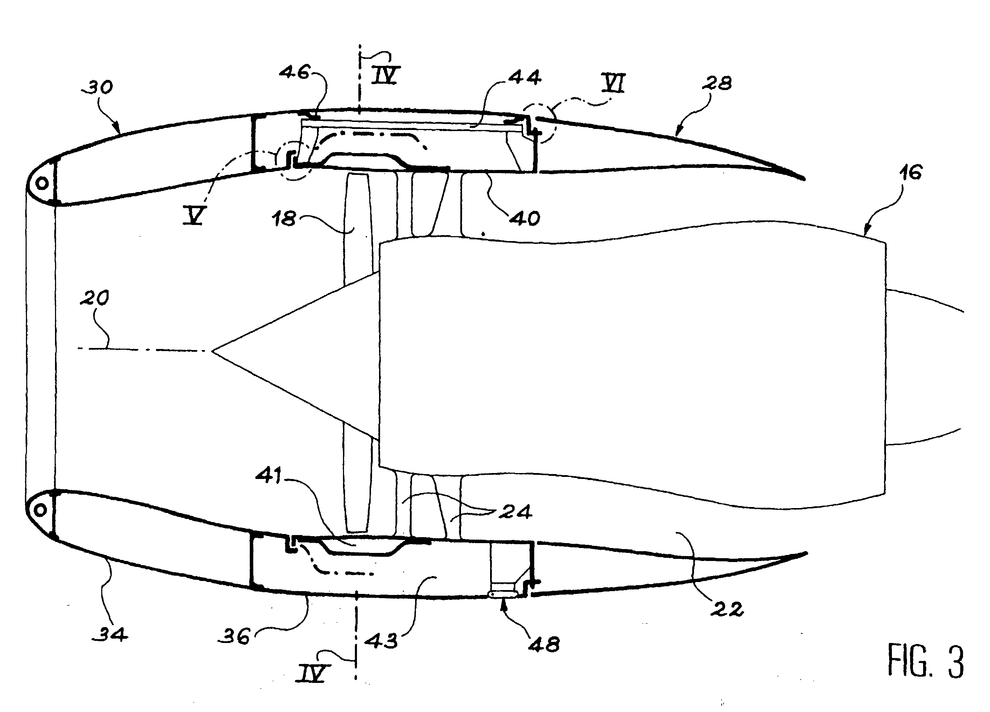

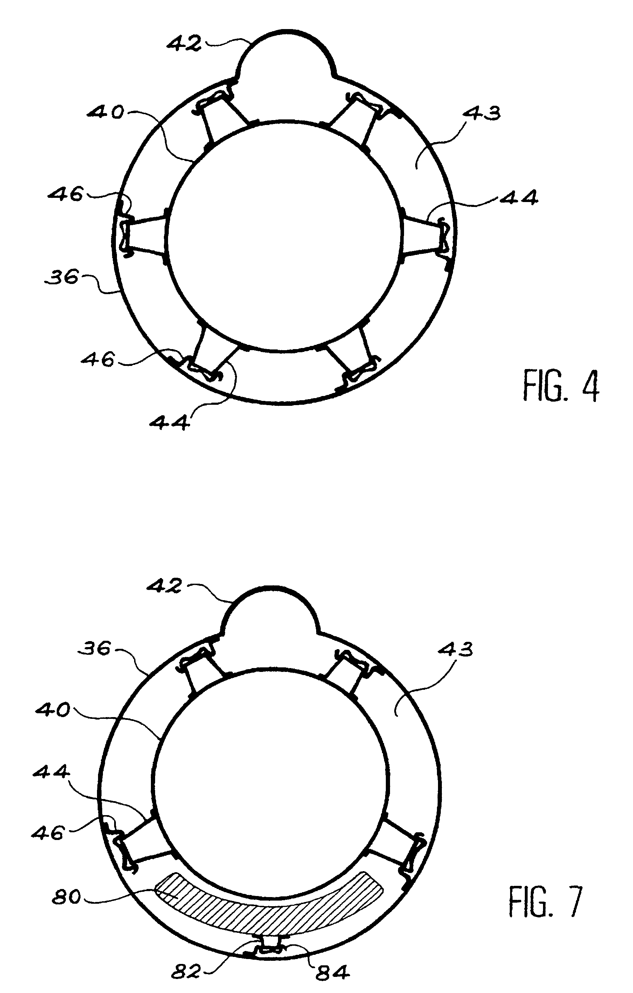

Comme l'illustrent notamment la figure 4 et la partie haute de la figure 3, l'élément structural avant 30 est monté sur le carter de soufflante 40 par des moyens de maintien et de guidage constitués par des glissières 44 dans la forme de réalisation préférentielle décrite. Plus précisément, le carter de soufflante 40 porte sur sa surface extérieure un certain nombre de glissières 44 (six sur la figure 4) qui s'étendent sur la majeure partie de sa longueur, parallèlement à l'axe longitudinal 20. Ces glissières 44 sont régulièrement réparties sur toute la circonférence du carter de soufflante 40, de façon à assurer un maintien efficace de la coque extérieure 36 lorsque l'aéronef est en vol.

En particulier, deux des glissières 44 sont placées dans la partie supérieure de la nacelle, de façon à reboucler les efforts.

Dans la forme de réalisation représentée, qui correspond à un montage isostatique, toutes les glissières 44 sont supportées par le carter de soufflante 40.

En variante, les deux glissières montées dans la partie supérieure de la nacelle peuvent être fixées au mât 14. Une partie des efforts est alors transmise directement au mât, ce qui conduit à un montage hyperstatique de la nacelle 12.

Chacune des glissières 44 coopère avec un rail 46 monté à l'intérieur de la coque extérieure 36, de façon à autoriser un coulissement limité vers l'avant de l'élément structural avant 30, parallèlement à l'axe longitudinal 20 de la nacelle. Ce coulissement permet à l'élément structural avant 30 de se déplacer entre une position arrière de vol, illustrée en traits mixtes sur la figure 2 et en trait plein sur la figure 3, et une position avant de maintenance, illustrée en trait plein sur les figures 1 et 2. La coopération entre les glissières 44 et les rails 46 est telle qu'une rotation de l'élément structural avant 30 autour du carter de soufflante 40 est impossible.

Comme l'illustrent les figures 3 et 4, les glissières 44 sont réalisées de telle sorte qu'elles sont écartées du carter de soufflante 40 d'une distance supérieure à une déformation maximale possible de ce dernier (illustrée en traits mixtes sur la figure 3) susceptible d'être engendrée par une rupture de pale de la soufflante 18. Plus précisément le carter de soufflante 40 présente, autour de la soufflante 18, une partie renforcée 41, appelée "bouclier", dont la déformation maximale en cas de rupture de pale reste pratiquement sans conséquence sur les glissières 44, du fait que celles-ci sont suffisamment écartées du carter de soufflante 40.

Afin d'assurer le blocage de l'élément structural avant 30 dans sa position arrière de vol, des moyens de verrouillage sont prévus entre l'élément structural avant 30 et l'élément structural arrière 28 de la nacelle. Comme on l'a illustré dans le bas de la figure 3, ces moyens de verrouillage sont constitués par un certain nombre de verrous 48, régulièrement répartis sur toute la circonférence autour de l'axe longitudinal 20. A titre d'exemple, cinq ou six verrous peuvent être prévus entre les deux éléments constitutifs de la nacelle. Les verrous 48 sont orientés parallèlement à l'axe longitudinal 20, de façon à assurer une transmission optimale des efforts entre les deux éléments.

Dans la forme de réalisation préférentielle, illustrée schématiquement sur la figure 3, les verrous 48 sont interposés entre l'extrémité arrière de l'élément structural avant 30 (c'est-à-dire de la coque extérieure 36) et l'extrémité avant de l'élément structural arrière 28 (c'est-à-dire le cadre avant de l'inverseur de poussée dont l'architecture reste inchangée, par rapport à celle des turboréacteurs existants).

Afin de ne pas engendrer de déformations parasites de l'élément structural avant 30 et notamment de sa coque extérieure 36, aucune liaison n'est prévue entre l'élément 30 et le mât 14.

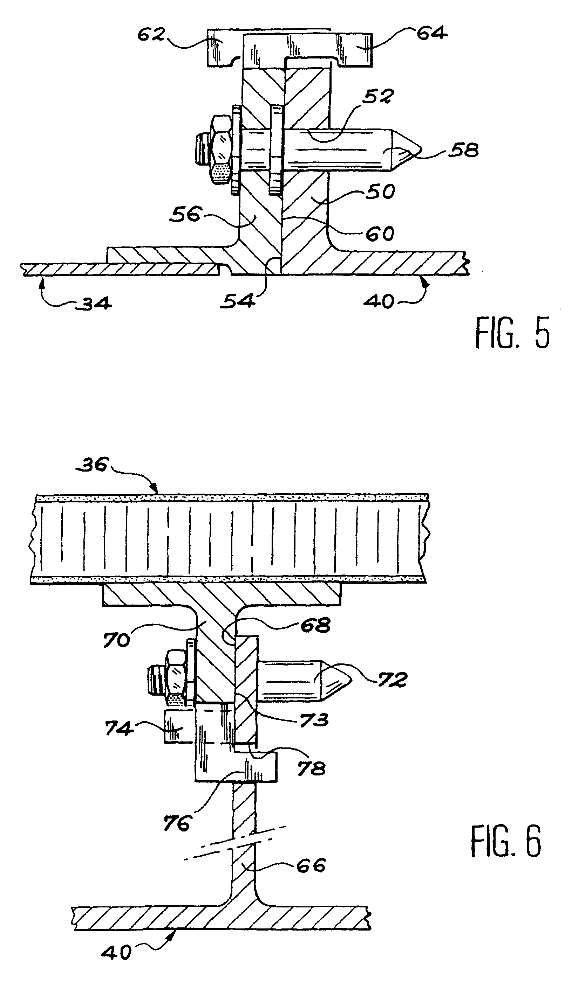

Afin d'assurer la transmission des efforts axiaux, malgré l'absence de liaison entre l'élément structural avant 30 et le mât 14, l'élément structural avant coopère directement avec le carter de soufflante 40, à l'avant et à l'arrière de celui-ci, par deux structures de liaison qui vont à présent être décrites successivement en se référant aux figures 5 et 6.

La figure 5 illustre la structure de liaison par laquelle l'élément structural avant 30 coopère avec l'extrémité avant du carter de soufflante 40. Comme l'illustre cette figure, le carcer de soufflante 40 est muni à son extrémité avant d'une bride extérieure 50 munie de trous 52 sur toute sa périphérie. La face avant de la bride 50 définit une surface d'appui 54, orientée radialement par rapport à l'axe longitudinal 20.

Par ailleurs, une bride extérieure 56 est rapportée sur l'extrémité avant de la paroi intérieure du caisson d'entrée d'air 34. Cette bride 56 est traversée par des trous dans lesquels sont fixés des pions de cisaillement 58 orientés vers l'arrière, parallèlement à l'axe longitudinal 20. Plus précisément, le nombre et la disposition des pions de cisaillement 58 sont tels que l'un de ces pions est normalement reçu, pratiquement sans jeu, dans chacun des trous 52 de la bride 50 lorsque l'élément structural avant 30 occupe sa position arrière de vol. La face avant de la bride 56 forme une surface de butée avant 60 qui est alors en appui contre la surface d'appui 54 de la bride 50.

L'extrémité de la bride 50 porte des pattes 62 orientées vers l'avant, de façon à se trouver en face du bord périphérique extérieur de la bride 56, lorsque l'élément structural avant 30 est en position arrière de vol. De même, l'extrémité de la bride 56 porte des pattes 64 orientées vers l'arrière, de façon à se trouver alors en face du bord périphérique de la bride 50. Cet agencement, dans lequel des jeux sont prévus entre les pattes 62 et 64 et les brides 56 et 50, permet de suppléer les pions de cisaillement 58 en cas de rupture de ces derniers.

Sur la figure 6, on voit qu'une structure de liaison comparable à celle qui vient d'être décrite en se référant à la figure 5 est prévue entre l'élément structural avant 30 et l'extrémité arrière du carter de soufflante 40. Comme l'illustre cette figure, le carter de soufflante 40 porte, à proximité de son extrémité arrière, une bride extérieure 66 traversée par des trous (non représentés) sur toute sa circonférence. La face avant de la bride 66 forme une surface d'appui 68.

Par ailleurs, une bride intérieure 70 est montée dans la coque extérieure 36, à proximité de son extrémité arrière. Cette bride 70 porte des pions de cisaillement 72 orientés vers l'arrière, parallèlement à l'axe longitudinal 20, de façon à pénétrer normalement, pratiquement sans jeu, dans les trous formés dans la bride 66, dans la position arrière de vol de l'élément structural avant 30. La face arrière de la bride 70 forme une surface de butée arrière 73 qui est alors en appui contre la surface d'appui 68.

Des bras 74 font saillie vers l'avant à partir de la bride 66 au-delà du bord périphérique intérieur de la bride 70. De même, des bras 76 font saillie vers l'arrière à partir du bord périphérique de la bride 70, au travers d'encoches 78 formées à cet effet dans la bride 66. Cet agencement, qui prévoit un jeu radial entre les bras 74 et 76 et les brides 70 et 66, permet de suppléer les pions de cisaillement 72 en cas de rupture de ces derniers.

Sur la figure 4, on a représenté le cas où les moyens de guidage qui sont interposés entre l'élément structural avant 30 et le carter de soufflante 40 sont constitués de glissières 44 réparties régulièrement sur toute la circonférence du turboréacteur. Cette disposition suppose que le boîtier d'accessoires habituellement implanté dans la nacelle 12 soit décalé vers l'arrière par rapport aux glissières et implanté, par exemple, dans l'élément structural arrière 28. Lors de la maintenance, le déplacement vers l'avant de l'élément structural avant 30 le long des glissières 44 peut alors être limité à une valeur maximale d'environ 500 mm. En effet, un tel déplacement est suffisant pour dégager les interfaces du mât 14 ainsi que des boîtiers électriques implantés dans l'espace annulaire 43.

Le boîtier d'accessoires, qui contient des équipements tels qu'un générateur de courant continu, des pompes hydrauliques, etc., requiert de nombreuses actions de maintenance. Lorsque ce boîtier est implanté dans l'espace annulaire 43 formée entre la coque extérieure 36 et le carter de soufflante 40, le coulissement maximal vers l'avant de l'élément structural avant 30 doit donc être plus important, par exemple d'environ 800 mm.

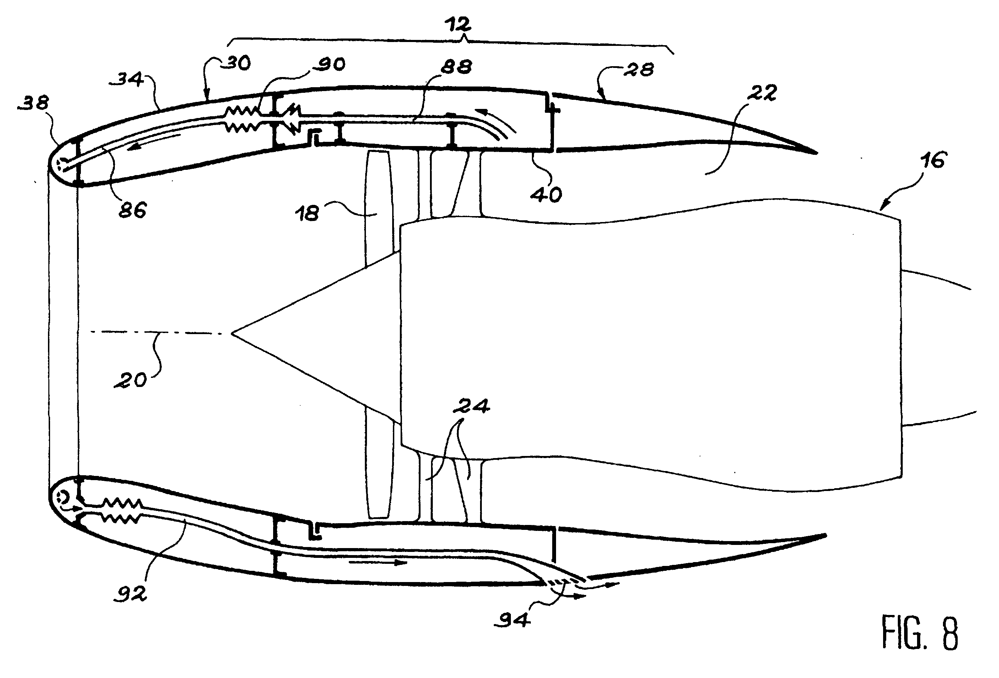

La figure 7 illustre précisément le cas où le boîtier d'accessoires 80 est implanté dans l'espace annulaire 43 formé entre la coque extérieure 36 et le carter de soufflante 40. Dans ce cas, certaines des glissières 44 situées au droit du boîtier 80 sont supprimées et remplacées par un ou des patins 82 liés au boîtier. Ces patins contribuent, comme les glissières 44, à maintenir la rigidité de l'élément structural avant 30. Chacun des patins 82 coopère avec un rail 84 comparable aux rails 46.

Le caractère coulissant de l'élément structural avant 30 nécessite de recourir à des agencements particuliers en ce qui concerne les tuyauteries qui cheminent dans cet élément.

Ainsi et comme on l'a représenté sur la partie haute de la figure 8, la lèvre avant 38 du caisson d'entrée d'air 34 est généralement pourvue de moyens de dégivrage qui sont alimentés en air chaud par une ou plusieurs tuyauteries rigides. Pour permettre le coulissement de l'élément structural avant 30, chacune de ces tuyauteries comprend un tronçon avant 86, monté dans l'élément structural avant 30, et un tronçon arrière fixe 88, porté par le carter de soufflante 40. Ces deux tronçons 86 et 88 de la tuyauterie sont alignés parallèlement à l'axe longitudinal 20 du turboréacteur, de façon à être normalement en appui par leurs extrémités, lorsque l'élément structural avant est en position arrière de vol. La dilatation thermique des deux tronçons 86 et 88 de la tuyauterie permet d'assurer, au niveau de la jonction entre ces deux tronçons, une pression compatible avec un niveau de fuite minimal. Un élément de raideur 90, incorporé dans le tronçon 86, évite que des contraintes trop importantes soient appliquées sur la tuyauterie en cas de dilatation élevée.

Comme on l'a illustré sur la partie basse de la figure 8, des tuyauteries d'évacuation de fluide telles qu'une tuyauterie 92 de sortie de dégivrage peuvent aussi être montées dans l'élément structural avant 30. Ces tuyauteries débouchent alors sur la surface extérieure de la nacelle, par un orifice 94 prévu dans l'élément structural arrière 28 sans toutefois interférer avec cet élément lors du coulissement de l'élément structural avant. Les fluides sont ainsi évacués dans la partie arrière, non laminaire, de la surface extérieure de la nacelle.

D'autres tuyauteries comparables à la tuyauterie 92 peuvent aussi être utilisées, notamment pour assurer le drainage du boîtier d'accessoires 80.

La nacelle 12 peut aussi être équipée de tuyauteries souples (non représentées) dont une extrémité est raccordée sur un capteur de pression ou de température monté sur l'élément structural avant. L'extrémité opposée de la tuyauterie souple est alors lovée dans un réceptacle porté par le carter de soufflante 40 ou par l'élément structural arrière 28. Des moyens de tension associés à ce réceptacle maintiennent la tuyauterie enroulée dans celui-ci.

Il est à noter que les déplacements de l'élément structural avant 30 entre sa position de vol et sa position de maintenance peuvent être réalisés manuellement ou au moyen d'un vérin de servitude implanté dans la nacelle.

Comme on l'a déjà noté, l'inverseur de poussée du turboréacteur est situé dans l'élément structural arrière 28, immédiatement en arrière de la coque extérieure 36. Lorsque l'inverseur de poussée est un inverseur à portes, celles-ci peuvent éventuellement recouvrir légèrement l'extrémité arrière de la coque extérieure 36 en position de vol. Cette caractéristique permet alors d'améliorer la tenue structurale de la coque 36, notamment en cas de rupture de pale de la soufflante 18.

Enfin, il est à noter que l'architecture originale de la nacelle conforme à l'invention permet de recourir à la majorité des techniques connues de transfert des efforts vers le mât.

## Revendications

1. Nacelle (12) de turboréacteur (10) comprenant:
- un élément structural arrière (28) ;
- un élément structural avant (30), intégrant un caisson d'entrée d'air (34) et une coque extérieure (36) prolongeant vers l'arrière, sans discontinuité, une surface extérieure du caisson d'entrée d'air;
- des moyens de maintien et de guidage (44), interposés entre l'élément structural avant (30) et un carter de soufflante (40) du turboréacteur, de façon à autoriser un coulissement limité vers l'avant de l'élément structural avant (30) parallèlement à un axe longitudinal (20) de la nacelle ; et
- des moyens de verrouillage (48) s'opposant normalement à ce coulissement;
**caractérisée en ce que** l'élément structural avant (30) présente une surface extérieure continue qui s'étend sur au moins 50 % de la corde géométrique de la nacelle et entoure en la carénant une partie avant d'un mât (14) de suspension du turboréacteur (10).

2. Nacelle selon la revendication 1 , dans laquelle l'élément structural avant (30) comprend une structure principale (39), d'un seul tenant, et une lèvre avant (38) interchangeable, montée sur une extrémité avant de la structure principale par des moyens de fixation démontables.

3. Nacelle selon l'une quelconque des revendications précédentes, dans laquelle les moyens de verrouillage comprennent des verrous (48) orientés sensiblement parallèlement audit axe longitudinal (20) et interposés entre une extrémité arrière de l'élément structural avant (30) et une extrémité avant de l'élément structural arrière (28).

4. Nacelle selon l'une quelconque des revendications précédentes, dans laquelle l'élément structural avant (30) présente une surface de butée avant (60) et une surface de butée arrière (73), normalement en appui contre des surfaces d'appui (54,68) formées sur le carter de soufflante (40).

5. Nacelle selon la revendication 4, dans laquelle des pions de cisaillement (58,72) font saillie vers l'arrière selon l'axe longitudinal (20) de la nacelle, à partir desdites surfaces de butée (60,73), pour pénétrer sans jeu dans des trous (52) formés dans les surfaces d'appui (54,68), ou inversement.

6. Nacelle selon l'une quelconque des revendications précédentes, dans laquelle les moyens de guidage comprennent des glissières (44) portées par le carter de soufflante (40) et sur lesquelles peut coulisser l'élément structural avant (30), ces glissières étant écartées du carter de soufflante d'une distance supérieure à une déformation maximale de ce dernier susceptible d'être engendrée par une rupture de pale.

7. Nacelle selon l'une quelconque des revendications précédentes, dans laquelle au moins une tuyauterie rigide, logée dans la nacelle (12) comprend un tronçon avant (86) monté dans l'élément structural avant (30) et un tronçon arrière fixe (88), ces deux tronçons étant alignés parallèlement à l'axe longitudinal (20) de la nacelle, de façon à être normalement en appui par leurs extrémités, sous l'effet de la dilatation thermique.

8. Nacelle selon l'une quelconque des revendications précédentes, dans laquelle une tuyauterie souple présente une première extrémité liée à l'élément structural avant (30) et une deuxième extrémité lovée dans un réceptacle fixe, sous l'action de moyens de tension.

9. Nacelle selon l'une quelconque des revendications précédentes, dans laquelle au moins une tuyauterie d'évacuation de fluide (92), logée dans l'élément structural avant (30), débouche vers l'extérieur dans l'élément structural arrière (28).

10. Nacelle selon l'une quelconque des revendications précédentes, dans laquelle un boîtier d'accessoires (80) est logé dans l'élément structural arrière (28).

11. Nacelle selon l'une quelconque des revendications 1 à 10, dans laquelle un boîtier d'accessoires (80) est logé entre le carter de soufflante (40) et l'élément structural avant (30).

## Patentansprüche

1. Gondel (12) für Triebwerk (10), umfassend:
- ein hinteres Strukturelement (28);
- ein vorderes Strukturelement (30), bei dem ein Lufteintrittsgehäuse (34) und eine Außenschale (36) integriert sind, die eine Außenoberfläche des Lufteintrittsgehäuses ohne Unterbrechung nach hinten verlängert;
- Halte- und Führungseinrichtungen (44), eingefügt zwischen dem vorderen Strukturelement (30) und einem Gebläsegehäuse (40) des Triebwerks, um ein begrenztes Gleiten des vorderen Strukturelements (30) nach vorn zu ermöglichen, parallel zu einer Längsachse (20) der Gondel; und
- Verriegelungseinrichtungen (48), die sich normalerweise diesem Gleiten widersetzen;
**dadurch gekennzeichnet,**
**dass** das vordere Strukturelement (30) eine durchgehende Außenoberfläche hat, die sich über wenigstens 50% der geometrischen Tiefe der Gondel erstreckt und einen vorderen Teil eines Aufhängungsmasts (14) des Triebwerks (10) stromlinienförmig umgibt.

2. Gondel nach Anspruch 1, bei der das vordere Strukturelement (30) eine Hauptstruktur (39) aus einem Stück und ein austauschbares Vorteil (38) umfasst, das mittels demontierbarer Befestigungseinrichtungen auf ein vorderes Ende der Hauptstruktur montiert ist.

3. Gondel nach einem der vorangehenden Ansprüche, bei der die Verriegelungseinrichtungen Riegel (48) umfassen, im Wesentlichen parallel zu der genannten Längsachse (20) ausgerichtet und eingefügt zwischen ein hinteres Ende des vorderen Strukturelements (30) und ein vorderes Ende des hinteren Strukturelements (28).

4. Gondel nach einem der vorangehenden Ansprüche, bei der das vordere Strukturelement (30) eine vordere Anschlagfläche (60) und eine hintere Anschtagfläche (73) umfasst, die sich normalerweise abstützen auf Abstützflächen (54, 68), die an dem Gebläsegehäuse (40) ausgebildet sind.

5. Gondel nach Anspruch 4, bei der Abscherbolzen (58, 72) entsprechend der Längsachse (20) ab der genannten Anschlagflächen (60, 73) nach hinten aus der Gondel herausragen, um ohne Spiel in Löcher (52) einzudringen, die in den Abstützflächen (54, 58) ausgebildet sind, oder umgekehrt.

6. Gondel nach einem der vorangehenden Ansprüche, bei der die Führungseinrichtungen Gleitschienen (44) umfassen, getragen durch das Gebläsegehäuse (40), auf denen das vordere Strukturelement (30) gleiten kann, wobei diese Gleitschienen von dem Gebläsegehäuse durch einen Abstand getrennt sind, der größer ist als eine maximale Verformung dieses letzteren, wie sie zum Beispiel ein eventueller Schaufel- bzw. Blattbruch verursachen könnte.

7. Gondel nach einem der vorangehenden Ansprüche, bei der wenigstens ein in der Gondel (12) vorhandenes steifes Rohr ein in das vordere Strukturelement (30) montiertes vorderes Teilstück (86) und ein hinteres, fixes Teilstück (88) umfasst, wobei diese beiden Teilstücke parallel zur Längsachse (20) der Gondel ausgerichtet sind bzw. fluchten, so dass sie sich normalerweise unter der Wirkung der Wärmeausdehnung mit ihren Enden abstützen bzw. aufeinander stützen.

8. Gondel nach einem der vorangehenden Ansprüche, bei der ein biegsames Rohr ein erstes Ende aufweist, das mit dem vorderen Strukturelement (30) verbunden ist, und ein zweites Ende, das durch Spannungserzeugungseinrichtungen in einem festen Aufnahmebehälter in Schleifen gelegt wird.

9. Gondel nach einem der vorangehenden Ansprüche, bei der wenigstens ein Fluid-Entleerungsrohr (92), in dem vorderen Strukturelement (30) vorgesehen, nach außen mündet, in das hintere Strukturelement (28).

10. Gondel nach einem der vorangehenden Ansprüche, die in dem hinteren Strukturelement (28) ein Zubehörgehäuse (80) umfasst.

11. Gondel nach einem der Ansprüche 1 bis 10, die zwischen dem Gebläsegehäuse (40) und dem vorderen Strukturelement (30) ein Zubehörgehäuse (80) umfasst.

## Claims

1. Jet engine (10) bay (12), comprising:
- a rear structural element (28),
- a front structural element (30), integrating an air intake box (34) and an external shell (36) extending rearwards and without any discontinuity, an external surface of the air intake box,
- maintenance and guidance means (44), interposed between the front structural element (30) and a jet engine fan case (40), so as to allow a limited sliding forwards of the front structural element (30) parallel to a longitudinal axis (20) of the bay and
- locking means (48) normally opposing said sliding,
**characterized in that** the front structural element (30) having a continuous, external surface extending over at least 50% of the geometrical chord of the bay and surrounds and shrouds a front part of a suspended pylon (14) for the jet engine (10).

2. Bay according to claim 1, wherein the front structural element (30) has a main structure (39), in one piece, and an interchangeable, front lip (38), installed on the front end of the main structure using dismantlable fixing means.

3. Bay according to any one of the preceding claims, wherein the locking means comprise latches (48) oriented substantially parallel to said longitudinal axis (20) and interposed between a rear end of the front structural element (30) and a front end of the rear structural element (28).

4. Bay according to any one of the preceding claims, wherein the front structural element (30) has a front abutment surface (60) and a rear abutment surface (73), normally bearing against bearing surfaces (54, 68) formed on the fan case (40).

5. Bay according to claim 4, wherein shear pins (58, 72) project rearwards along the longitudinal axis (20) of the bay, from said abutment surfaces (60, 73), in order to penetrate without clearance in holes (52) formed in the bearing surfaces (54, 68) or vice versa.

6. Bay according to any one of the preceding claims, wherein the guidance means comprise slides (44) carried by the fan case (40) and on which can slide the front structural element (30), said slides being spaced from the fan case by a distance exceeding the maximum deformation of the latter liable to be caused by a blade fracture.

7. Bay according to any one of the preceding claims, wherein at least one rigid line, housed in the bay (12), has a front section (86) installed in the front structural element (30) and a fixed, rear section (88), said two sections being aligned parallel to the longitudinal axis (20) of the bay, so as to normally bear by their ends, under the effect of the thermal expansion.

8. Bay according to any one of the preceding claims, wherein a flexible line has a first end connected to the front structural element (30) and a second end coiled in a fixed receptacle, under the action of tension means.

9. Bay according to any one of the preceding claims, wherein at least one fluid discharge line (92), housed in the front structural element (30), issues to the outside into the rear structural element (28).

10. Bay according to any one of the preceding claims, wherein an accessory box (80) is housed in the rear structural element (28).

11. Bay according to any one of the claims 1 to 10, wherein an accessory box (80) is housed between the fan case (40) and the front structural element (30).
